(19) Europäisches Patentamt / European Patent Office / Office européen des brevets

(11) **EP 4 768 962 A1**

(12) **EUROPEAN PATENT APPLICATION**
published in accordance with Art. 153(4) EPC

(43) Date of publication:
**01.07.2026 Bulletin 2026/27**

(21) Application number: 25827245.9

(22) Date of filing: **16.04.2025**

(51) International Patent Classification (IPC):
*G01R 31/392* (2019.01)    *G01R 31/367* (2019.01)
*G01R 31/396* (2019.01)    *G01R 31/389* (2019.01)
*G01R 31/3835* (2019.01)    *G06N 3/08* (2023.01)
*H04L 9/00* (2022.01)    *H01M 10/54* (2006.01)

(52) Cooperative Patent Classification (CPC):
**G01R 31/367; G01R 31/3835; G01R 31/389;
G01R 31/392; G01R 31/396; G06N 3/08;
H01M 10/54; H04L 9/00**

(86) International application number:
**PCT/KR2025/005163**

(87) International publication number:
**WO 2026/005233 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024  KR 20240085657
08.10.2024  KR 20240136291**

(71) Applicant: **LG Energy Solution, Ltd.
Seoul 07335 (KR)**

(72) Inventor: **PARK, Heon Il
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **BATTERY DIAGNOSIS APPARATUS AND METHOD THEREOF**

(57)     A battery diagnosis device according to an embodiment herein may include a memory storing at least one instruction and one or more processors executing the at least one instruction, and the one or more processors may be configured to identify an identifier and a state of a battery unit, identify a utilization grade for reuse or recycling of the battery unit based on the state of the battery unit, and generate a certificate including at least one of the utilization grade of the battery unit, information on a constituent component predicted to be recovered from the battery unit, information on a predicted mass of each constituent component predicted to be recovered from the battery unit, information on a predicted price of the battery unit, or any combination thereof, based on the identifier of the battery unit.

BATTERY DIAGNOSIS DEVICE(201)

MEMORY(203)

ONE OR MORE PROCESSORS(205)

FIG.2

**Description**

**TECHNICAL FIELD**

**Cross-reference to Related Applications**

This application claims priority from Korean Patent Application Nos. 10-2024-0085657, filed June 28, 2024, and 10-2024-0136291, filed October 8, 2024, the disclosures of which are incorporated by reference herein.

**Technical Field**

Embodiments disclosed herein relate to a battery diagnosis device and a method thereof.

**BACKGROUND ART**

In recent years, research and development for secondary batteries have been actively conducted. Here, secondary batteries are batteries capable of being recharged and discharged, and may be interpreted to encompass both conventional Ni/Cd batteries, Ni/MH batteries, or the like, and recent lithium ion batteries. In recent years, the lithium ion batteries have expanded their range of use to power sources for electric vehicles, making the batteries attract attention as a next-generation energy storage medium.

As various types of electronic devices become widespread due to the Fourth Industrial Revolution, battery usage is rapidly increasing. Batteries are gaining attention as an essential energy source in various fields, and accordingly, the need for technologies to process and recycle batteries is increasing.

Proper processing and recycling of batteries is important not only for efficient use of resources, but also for environment protection. Accordingly, battery diagnosis technologies are being developed that diagnose the state of batteries and classify the batteries into reusable batteries, recyclable batteries, and batteries to be discarded.

**DISCLOSURE OF THE INVENTION**

**TECHNICAL PROBLEM**

Embodiments disclosed herein are directed to providing a battery diagnosis device for sharing a result of diagnosing a battery unit and a method thereof.

Embodiments disclosed herein are directed to providing a battery diagnosis device for diagnosing a battery unit and providing a utilization grade and a method thereof.

Embodiments disclosed herein are directed to providing a battery diagnosis device for acquiring information on the mass of each of constituent components of a battery unit without disassembling the battery unit and a method thereof.

Embodiments disclosed herein are directed to providing a battery diagnosis device for generating a certificate based on a result of diagnosing a battery unit and a method thereof.

Embodiments disclosed herein are directed to providing a battery diagnosis device for improving the security strength of a certificate generated and shared based on a result of diagnosing a battery unit and a method thereof.

The technical problems of the present disclosure are not limited to those mentioned above, and other objectives not mentioned will be clearly understood by those skilled in the art from the following descriptions.

**TECHNICAL SOLUTION**

A battery diagnosis device according to an embodiment of the present disclosure may include a memory storing at least one instruction and one or more processors executing the at least one instruction.

According to an embodiment, the one or more processors may identify an identifier and a state of a battery unit, identify a utilization grade for reuse or recycling of the battery unit based on the state of the battery unit, and generate a certificate including at least one of the utilization grade of the battery unit, information on a constituent component predicted to be recovered from the battery unit, information on a predicted mass of each constituent component predicted to be recovered from the battery unit, information on a predicted price of the battery unit, or any combination thereof, based on the identifier of the battery unit.

According to an embodiment, the one or more processors may identify at least one of state of health (SOH) information about the battery unit, impedance change information about the battery unit, open circuit voltage (OCV) information about the battery unit, or any combination thereof based on the state of the battery unit, and identify the utilization grade based on at least one of the SOH information, the impedance change information, the OCV information, or any combination thereof.

According to an embodiment, the one or more processors may identify the state of the battery unit including at least one of state of charge (SOC) information about the battery unit, voltage information about the battery unit, temperature information about the battery unit, resistance information about the battery unit, impedance information about the battery unit, information on the number of charges of the battery unit, information on the number of discharges of the battery unit, or any combination thereof.

According to an embodiment, the certificate may further include at least one of usage category information about the battery unit according to the utilization grade, age information about the battery unit, SOH information about the battery unit, impedance change information about the battery unit, OCV information about the battery unit, state information about a battery cell included in the battery unit, or any combination thereof.

According to an embodiment, the one or more processors may convert the certificate into blockchain data or non-fungible token (NFT) data, and store the blockchain data or the NFT data in a plurality of nodes, each corresponding to an external server.

According to an embodiment, the one or more processors may identify, based on the state of the battery unit, at least one of SOH information about the battery unit, impedance change information about the battery unit, OCV information about the battery unit, information on a constituent component of the battery unit corresponding to the identifier of the battery unit in a beginning-of-life (BOL) state, information on a mass of each constituent component of the battery unit corresponding to the identifier of the battery unit in the BOL state, or any combination thereof, input, into a learning model, at least one of the SOH information, the impedance change information, the OCV information, the information on a constituent component of the battery unit in the BOL state, the information on a mass of each constituent component of the battery unit corresponding to the identifier of the battery unit in the BOL state, or any combination thereof, and identify at least one of the utilization grade output from the learning model, the information on a constituent component predicted to be recovered from the battery unit, the information on the mass of each constituent component predicted to be recovered from the battery unit, the price information, or any combination thereof.

According to an embodiment, the one or more processors may input, into the learning model, training data including at least one of SOH information about a battery unit different from the battery unit, impedance change information about the different battery unit, OCV information about the different battery unit, or any combination thereof, input, into the learning model, target data including at least one of recovery rate information indicating a recovery rate depending on a constituent component of the different battery unit identified by comparing the information on the mass of each constituent component of the different battery unit in the BOL state with information on the mass of each constituent component recovered from the disassembled different battery unit, information on a constituent component recovered from the different battery unit, information on a mass of each constituent component recovered from the different battery unit, information on a price of the different battery unit, or any combination thereof, and train the learning model based on a correlation between the training data and the target data.

According to an embodiment, the certificate may further include at least one of first carbon emissions corresponding to power consumed by the battery unit when the battery unit is reused, second carbon emissions corresponding to power consumed by the battery unit that is recycled and then remanufactured when the battery unit is recycled, information on a predicted recovery rate of the battery unit, or any combination thereof.

According to an embodiment, the one or more processors may generate, based on the utilization grade being a specified grade, the certificate including at least one of the second carbon emissions, the information on a predicted recovery rate of the battery unit, the information on a constituent component predicted to be recovered from the battery unit, the mass information, or any combination thereof.

A battery diagnosis method according to another embodiment of the present disclosure may include identifying an identifier of a battery unit, identifying a state of a battery unit, identifying a utilization grade for reuse or recycling of the battery unit based on the state of the battery unit, and generating a certificate including at least one of the utilization grade of the battery unit, information on a constituent component predicted to be recovered from the battery unit, information on a predicted mass of each constituent component predicted to be recovered from the battery unit, information on a predicted price of the battery unit, or any combination thereof, based on the identifier of the battery unit.

According to an embodiment, the identifying of the utilization grade for reuse or recycling of the battery unit based on the state of the battery unit may include identifying at least one of SOH information about the battery unit, impedance change information about the battery unit, OCV information about the battery unit, or any combination thereof based on the state of the battery unit and identifying the utilization grade based on at least one of the SOH information, the impedance change information, the OCV information, or any combination thereof.

According to an embodiment, the identifying of the state of the battery unit may include identifying the state of the battery unit including at least one of SOC information about the battery unit, voltage information about the battery unit, temperature information about the battery unit, resistance information about the battery unit, impedance information about the battery unit, information on the number of charges of the battery unit, information on the number of discharges of the battery unit, or any combination thereof.

According to an embodiment, the certificate may further include at least one of usage category information about the battery unit according to the utilization grade, age information about the battery unit, SOH information about the battery unit, impedance change information about the battery unit, OCV information about the battery unit, state information about a battery cell included in the battery unit, or any combination thereof.

According to an embodiment, the battery diagnosis method may further include converting the certificate into blockchain data or non-fungible token (NFT) data, and storing the blockchain data or the NFT data in a plurality of nodes, each corresponding to an external server.

According to an embodiment, the generating of the certificate including at least one of the utilization grade of the battery unit, the information on a constituent component predicted to be recovered from the battery unit, the information on a predicted mass of each constituent component predicted to be recovered from the battery unit, the information on a predicted price of the battery unit, or any combination thereof, based on the identifier of the battery unit may include identifying, based on the state of the battery unit, at least one of SOH information about the battery unit, impedance change information about the battery unit, OCV information about the battery unit, information on a constituent component corresponding to the identifier of the battery unit, information on a mass of each constituent component corresponding to the identifier of the battery unit, or any combination thereof, inputting at least one of the SOH information, the impedance change information, the OCV information, the information on a constituent component of the battery unit corresponding to the identifier of the battery unit in the BOL state, the information on a mass of each constituent component of the battery unit corresponding to the identifier of the battery unit in the BOL state, or any combination thereof, into a learning model, and identifying at least one of the utilization grade output from the learning model, the information on a constituent component predicted to be recovered from the battery unit, the information on the mass of each constituent component predicted to be recovered from the battery unit, the price information, or any combination thereof.

According to an embodiment, the battery diagnosis method may further include inputting, into the learning model, training data including at least one of SOH information about a battery unit different from the battery unit, impedance change information about the different battery unit, OCV information about the different battery unit, or any combination thereof, inputting, into the learning model, target data including at least one of recovery rate information indicating a recovery rate depending on a constituent component of the different battery unit identified by comparing the information on the mass of each constituent component of the different battery unit in the BOL state with information on the mass of each constituent component recovered from the different battery unit, information on a constituent component recovered from the different battery unit, information on a mass of each constituent component recovered from the different battery unit, information on a price of the different battery unit, or any combination thereof, and training the learning model based on a correlation between the training data and the target data.

According to an embodiment, the certificate may further include at least one of first carbon emissions corresponding to power consumed by the battery unit when the battery unit is reused, second carbon emissions corresponding to power consumed by the battery unit that is recycled and then remanufactured when the battery unit is recycled, information on a predicted recovery rate of the battery unit, or any combination thereof.

According to an embodiment, the battery diagnosis method may further include generating, based on the utilization grade being a specified grade, the certificate including at least one of the second carbon emissions, the information on a predicted recovery rate of the battery unit, the information on a constituent component predicted to be recovered from the battery unit, the mass information, or any combination thereof.

## ADVANTAGEOUS EFFECTS

The present technology can share a result of diagnosing a battery unit.

In addition, the present technology can diagnose a battery unit and provide a utilization grade.

In addition, the present technology can acquire information on the mass of each of constituent components of a battery unit without disassembling the battery unit.

In addition, the present technology can generate a certificate based on a result of diagnosing a battery unit.

In addition, the present technology can improve the security strength of a certificate generated and shared based on the result of diagnosing a battery unit.

Besides, various effects may be provided that are directly or indirectly identified through the present disclosure.

## BRIEF DESCRIPTION OF THE DRAWINGS

FIG. 1 is a block diagram showing a battery pack, in a battery diagnosis device and a battery diagnosis method according to an embodiment of the present disclosure.

FIG. 2 is a block diagram showing the configuration of a battery diagnosis device, in the battery diagnosis device and the battery diagnosis method according to an embodiment of the present disclosure.

FIG. 3 illustrates an example of the battery diagnosis device for generating a certificate in the battery diagnosis device and the battery diagnosis method according to an embodiment of the present disclosure.

FIG. 4 illustrates an example of impedance change information about the battery unit in the battery diagnosis device and the battery diagnosis method according to an embodiment of the present disclosure.

FIG. 5 illustrates an example of a certificate of the battery unit whose utilization grade is a reuse grade in the battery diagnosis device and the battery diagnosis method according to an embodiment of the present disclosure.

FIG. 6 illustrates an example of a certificate of the battery unit whose utilization grade is a recycling grade in the battery diagnosis device and the battery diagnosis method according to an embodiment of the present disclosure.

FIG. 7 illustrates an example of a plurality of nodes, each of which corresponds to an external server, in the battery diagnosis device and the battery diagnosis method according to an embodiment of the present disclosure.

FIG. 8 illustrates examples of input data and output data of a learning model, in the battery diagnosis device and the battery diagnosis method according to an embodiment of the present disclosure.

FIG. 9 illustrates an example of a flow of operations of the battery diagnosis device for storing a certificate generated based on a trained learning model, in the battery diagnosis device and the battery diagnosis method according to an embodiment of the present disclosure.

FIG. 10 illustrates an example of a flow of operations of the battery diagnosis device for generating a certificate, in the battery diagnosis device and the battery diagnosis method according to an embodiment of the present disclosure.

FIG. 11 is a block diagram showing a hardware configuration of a computing system for performing a battery diagnosis method in the battery diagnosis device and the battery diagnosis method according to an embodiment of the present disclosure.

## MODE FOR CARRYING OUT THE INVENTION

Hereinafter, some embodiments disclosed herein are described with reference to the accompanying drawings of various embodiments of the present disclosure. However, this is not intended to limit the present technology to the specific embodiments, and it is to be construed to include various modifications, equivalents, and/or alternatives of embodiments of the present technology.

In adding reference numerals to the components of each drawing, it should be noted that the same components are given the same reference numerals as much as possible even though they are shown on different drawings. In addition, in describing various embodiments disclosed herein, when a detailed description of a related known configuration or function is determined to hinder understanding of the embodiments of the present invention, the detailed description thereof is omitted. It is to be understood that a singular form of a noun corresponding to an item may include one or more of the things, unless the relevant context clearly indicates otherwise.

In addition, in describing a component of the embodiments of the present disclosure, terms such as first, second, A, B, (a), (b), etc. may be used. These terms are only for distinguishing the component from other components, and the essence, sequence, or order of the component may not be limited by the terms. In addition, unless otherwise defined, all terms used herein, including technical or scientific terms, have the same meaning as commonly understood by those of ordinary skill in the art to which the embodiments disclosed herein belong. Terms, such as those defined in commonly used dictionaries, should be interpreted as having a meaning that is consistent with their meaning in the context of the related art and will not be interpreted in an idealized or overly formal sense unless expressly so defined herein.

In addition, in the present disclosure, in order to determine whether a specific condition is satisfied or fulfilled, expressions "more than" or "less than" may be used, but this is only a description for expressing an example and does not exclude descriptions of "equal to or more than" or "less than or equal to." A condition described as "equal to or more than" may be replaced with "more than," a condition described as "less than or equal to" may be replaced with "less than," and a condition described as "equal to or more than and less than" may be replaced with "more than and less than or equal to." In addition, hereinafter, "A to B" mean at least one of the elements from A (inclusive of A) to B (inclusive of B).

In the present disclosure, each of phrases such as "A or B," "at least one of A and B," "at least one of A or B," "A, B or C," "at least one of A, B and C," or "at least one of A, B, or C," may include any one of the items listed in the phrase, or all possible combinations of the phrases.

In the present specification, It is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or via a third element.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the described components may include a single entity or multiple entities, and some of the plurality of entities may be disposed separately from other components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

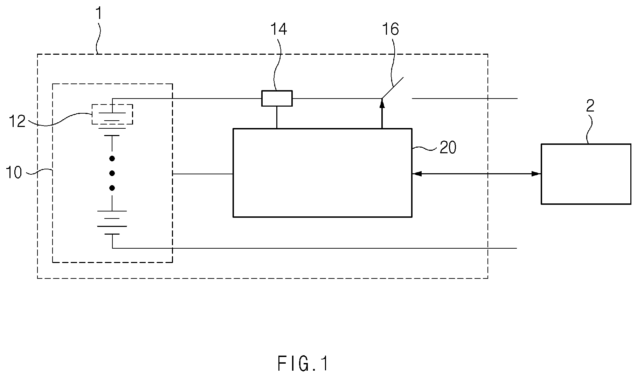

Hereinafter, embodiments of the present disclosure will be described in detail with reference to FIGS. 1 to 11.

FIG. 1 is a block diagram showing a battery pack, in a battery diagnosis device and a battery diagnosis method according to an embodiment of the present disclosure.

Referring to FIG. 1, a battery pack 1 may include a battery unit 12, a sensor unit 14, a switching unit 16, and a battery management system (BMS) 20. In this case, the battery pack 1 may be equipped with a plurality of battery units 12, sensor units 14, switching units 16, and battery management systems 20.

According to an embodiment, the battery unit 12 may supply power to a target device (not shown). For this purpose, the battery unit 12 may be electrically connected to the target device. Here, the target device may include an electrical, electronic, or mechanical device that operates by receiving power from the battery pack 1. For example, the target device may be an electric vehicle (EV) or an energy storage system (ESS), but is not limited thereto.

According to an embodiment, the battery unit 12 may include at least one battery cell 10 that is rechargeable and dischargeable. Here, the battery cell 10 may be a basic unit of a battery cell that may be used by being charged and discharged with electric energy. For example, the battery cell 10 may be a lithium ion (Li-ion) battery, a lithium ion (Li-ion) polymer battery, a nickel cadmium (Ni-Cd) battery, a nickel hydrogen (Ni-MH) battery, or the like, and may not be limited thereto.

According to an embodiment, a plurality of battery units 12 may be connected in series or in parallel. For example, the battery unit 12 may be a battery module, a battery bank, or a collection of battery cells (cell-to-pack structure).

According to an embodiment, the sensor unit 14 may acquire information related to the battery unit 12. According to an embodiment, the sensor unit 14 may acquire values (or information) related to the state of each of the battery units 12 or battery cells 10. In an embodiment, the state-related values may include one or more values for voltage, current, resistance, state of charge (SOC), state of health (SOH), or temperature of the battery cell, or a combination thereof.

According to an embodiment, the sensor unit 14 may provide information on each of the plurality of battery units 12 to the battery management system 20.

According to an embodiment, the switching unit 16 may include a device for controlling the current flow for charging or discharging the battery unit 12. For example, the switching unit 16 may include at least one relay and/or magnetic contactor, depending on the specifications of the battery pack 1.

According to an embodiment, the battery management system (BMS) 20 may control or manage the battery pack 1 to prevent overcharge and over-discharge by monitoring the voltage, current, temperature, and the like of the battery pack 1. For example, the battery management system 20 may be an interface for receiving values obtained by measuring the above-mentioned various parameters, and may include a plurality of terminals, a circuit connected to the terminals to process input values, or the like. In addition, the battery management system 20 may control the sensor unit 14 and/or the switching unit 16. For example, the battery management system 20 may be connected to a plurality of battery units 12 to monitor the state of each of the plurality of battery units 12 and control ON/OFF of the relay, the contactor, or the like.

According to an embodiment, the operation of the battery management system 20 may be performed by the BMS (battery management system) in a vehicle, as well as by various devices such as a server, a cloud, a charger, a discharger, or the like.

An upper-level controller 2 may transmit a control signal for the plurality of battery units 12 to the battery management system 20. Accordingly, the operation of the battery management system 20 may be controlled based on the signal received from the upper controller 2.

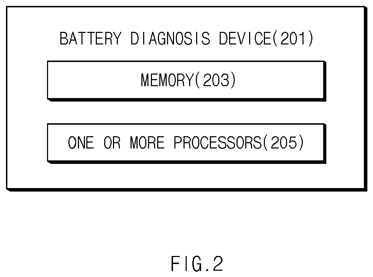

According to an embodiment, the battery management system 20 may include a battery diagnosis device 201 in FIG. 2. In another embodiment, the battery management system 20 may be a system different than the battery diagnosis device 201 in FIG. 2. That is, the battery diagnosis device 201 in FIG. 2 may be included in the battery pack 1 or may be configured as another device external to the battery pack 1. For convenience of explanation, the following description assumes that the battery diagnosis device 201 is constructed as another device external to the battery pack 1. In addition, the operation of the diagnosis device 201 below may be performed by a battery management system (BMS) in the vehicle, as well as by various devices such as a server, a cloud, a charger, a discharger, or the like.

FIG. 2 is a block diagram showing the configuration of a battery diagnosis device, in the battery diagnosis device and the battery diagnosis method according to an embodiment of the present disclosure.

Referring to FIG. 2, a battery diagnosis device 201 may include a memory 203 and one or more processors 205. The memory 203 may store at least one instruction. The one or more processors 205 may execute the at least one instruction.

According to an embodiment, the states of a battery unit may be divided into a beginning-of-life (BOL) state, a middle-of-life (MOL) state, and an end-of-life (EOL) state.

The BOL state may indicate an initial life state in which the number of battery charge/discharge cycles after the battery unit is manufactured is less than a specified first number. The MOL state may indicate a mid-life state in which the number of battery charge/discharge cycles is greater than or equal to the first number and less than or equal to a second number. The second number may be greater than the first number. The EOL state may indicate an end-of-life state in which the number of battery charge/discharge cycles is greater than or equal to the second number. The battery unit may be reused or recycled in the EOL state, depending on the degree of consumption of the battery unit. In order to measure the degree of consumption of the battery unit, the one or more processors 205 of the battery diagnosis device 201 may identify the state of the battery unit through a diagnosis sensor.

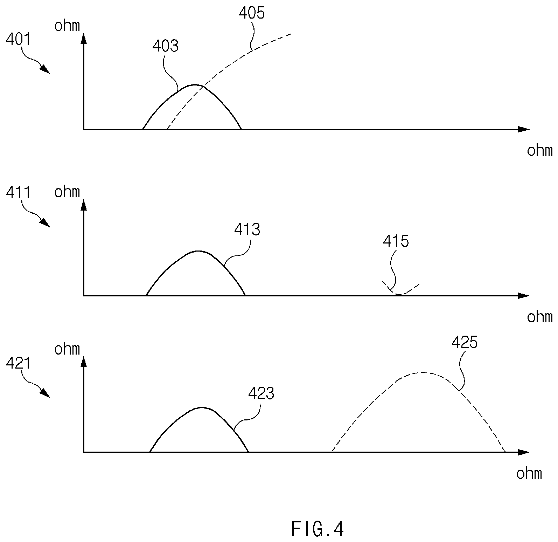

The state of the battery unit may include at least one of the state of charge (SOC) information about the battery unit, voltage information about the battery unit, temperature information about the battery unit, resistance information about the battery unit, impedance information about the battery unit, information on the number of charges of the battery unit, information on the number of discharges of the battery unit, or any combination thereof. Below, the state of the battery unit is described in FIG. 4.

According to an embodiment, the one or more processors 205 of the battery diagnosis device 201 may identify at least one of state of health (SOH) information about the battery unit, impedance change information about the battery unit, open circuit voltage (OCV) information about the battery unit, or any combination thereof, based on the state of the battery unit.

According to an embodiment, the one or more processors 205 of the battery diagnosis device 201 may identify a utilization grade for reuse or recycling of the battery unit based on at least one of SOH information about the battery unit, impedance change information about the battery unit, OCV information about the battery unit, or any combination thereof.

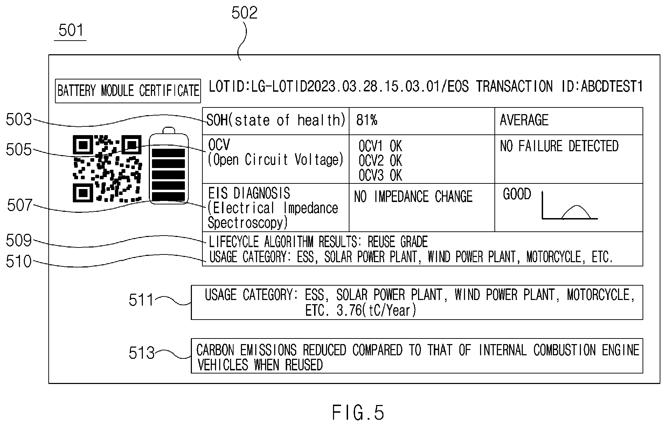

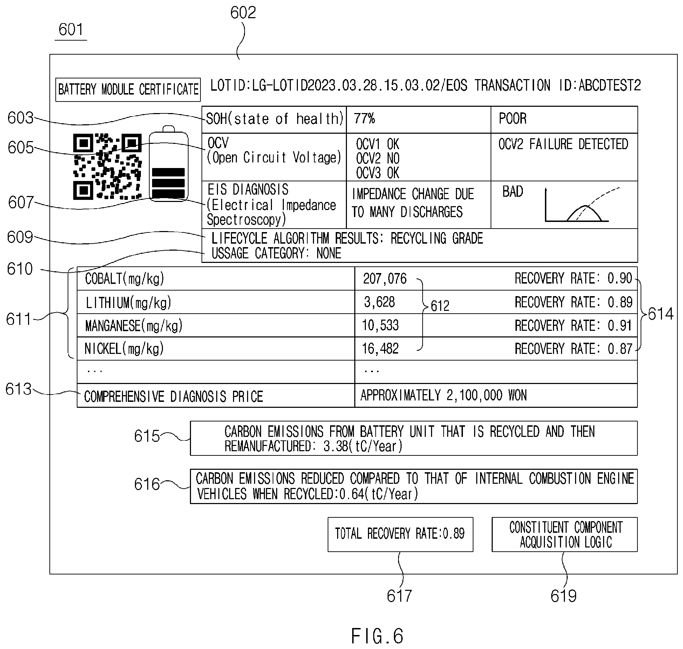

According to an embodiment, the one or more processors 205 of the battery diagnosis device 201 may generate a certificate including at least one of information on a constituent component predicted to be recovered from the battery unit, information on a predicted mass of each constituent component predicted to be recovered from the battery unit, information on a predicted price of the battery unit, usage category information about the battery unit according to the utilization grade, age information about the battery unit, SOH information about the battery unit, impedance change information about the battery unit, OCV information about the battery unit, state information about a battery cell included in the battery unit, or any combination thereof, based on the utilization grade and the identifier of the battery unit. Below, the certificate is described in FIGS. 5 and 6.

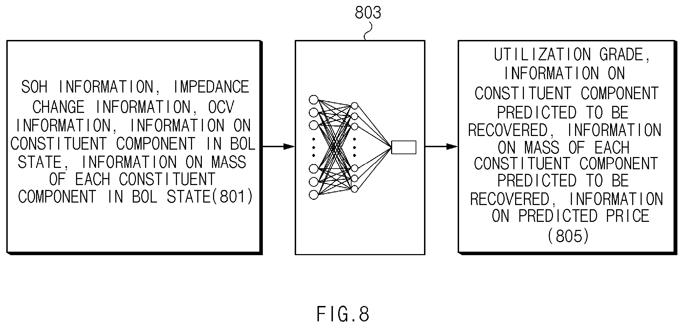

In this case, at least one of the utilization grade, the information on a constituent component predicted to be recovered from the battery unit, the information on a predicted mass of each constituent component to be recovered from the battery unit, information on a predicted price of the battery unit, or any combination thereof may be identified by a learning model. Below, a method of using the learning model is described in FIG. 8.

According to an embodiment, the one or more processors 205 of the battery diagnosis device 201 may convert the certificate into blockchain data or non-fungible token (NFT) data, and store the blockchain data or NFT data in a plurality of nodes, each corresponding to an external server.

The certificate converted into block chain data or NFT data is described below in FIG. 8.

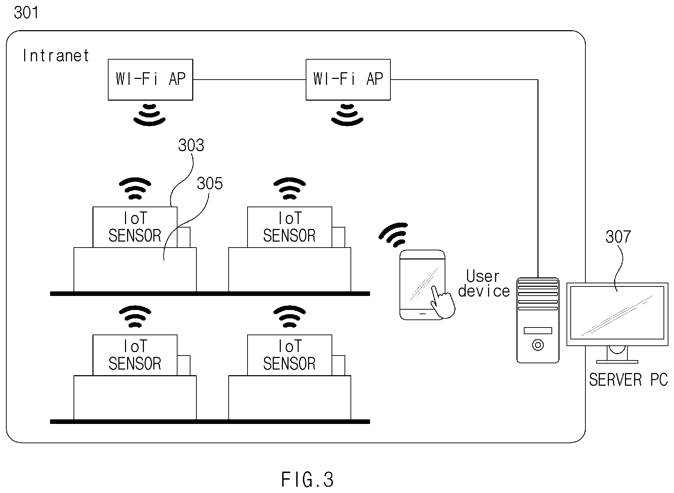

FIG. 3 illustrates an example of the battery diagnosis device for generating a certificate, in the battery diagnosis device and the battery diagnosis method according to an embodiment of the present disclosure.

Referring to FIG. 3, a diagnosis sensor 303 may identify the state of a battery unit 305. The one or more processors 205 of the battery diagnosis device 201 may acquire the state of the battery unit 305 identified by the diagnosis sensor 303 through an intranet 301.

For example, the diagnosis sensor 303 (e.g., an internet-of-things (IoT) sensor) may identify at least one of SOC information about the battery unit 305, voltage information about the battery unit 305, temperature information about the battery unit 305, resistance information about the battery unit 305, impedance information about the battery unit 305, information on the number of charges of the battery unit 305, information on the number of discharges of the battery unit 305, or any combination thereof.

A server 307 may include the one or more processors 205 of the battery diagnosis device 201. The one or more processors 205 of the battery diagnosis device 201 included in the server 307 may identify at least one of the SOH information about the battery unit 305, the impedance change information about the battery unit 305, the OCV information about the battery unit 305, or any combination thereof based on the state of the battery unit 305.

The one or more processors 205 of the battery diagnosis device 201 included in the server 307 may identify the utilization grade based on at least one of the SOH information about the battery unit 305, the impedance change information about the battery unit 305, the OCV information about the battery unit 305, or any combination thereof. The one or more processors 205 of the battery diagnosis device 201 included in the server 307 may generate a certificate including the utilization grade.

The one or more processors 205 of the battery diagnosis device 201 may convert the generated certificate into blockchain data or NFT data, and then store the certificate converted into blockchain data or NFT data in a plurality of nodes, each corresponding to an external server.

FIG. 4 illustrates an example of impedance change information about the battery unit in the battery diagnosis device and the battery diagnosis method according to an embodiment of the present disclosure.

Referring to FIG. 4, a first graph 401, a second graph 411, and a third graph 421 may represent Nyquist diagrams in which the horizontal axis represents a real part of an impedance and a vertical axis represents an imaginary part of the impedance. The first graph 401, the second graph 411, and the third graph 421 may be created according to electrochemical impedance spectroscopy (EIS).

According to an embodiment, in the first graph 401, a first line 403 may represent a change in impedance of a normal battery unit in response to a change in frequency of the AC power. A second line 405 may represent a change in impedance in response to a change in frequency of the AC power of the battery unit damaged due to discharge.

According to an embodiment, in the second graph 411, a third line 413 may represent the change in impedance of the normal battery unit in response to the change in frequency of the AC power. A fourth line 415 may represent a change in impedance in response to a change in frequency of the AC power of the battery unit damaged due to overheating.

According to an embodiment, in the third graph 421, a fifth line 423 may represent the change in impedance of the normal battery unit in response to the change in frequency of the AC power. A sixth line 425 may represent a change in impedance in response to a change in frequency of the AC power of the battery unit damaged due to a short circuit.

According to an embodiment, the one or more processors 205 of the battery diagnosis device 201 may identify whether the battery unit is defective and the cause of the defect in the battery unit based on the change in impedance in response to the change in frequency of the AC power of the battery unit.

FIG. 5 illustrates an example of a certificate of the battery unit whose utilization grade is a reuse grade in the battery diagnosis device and the battery diagnosis method according to an embodiment of the present disclosure.

Referring to FIG. 5, a certificate 501 may include, based on a battery unit identifier 502 of the battery unit 305, at least one of SOH information 503 about the battery unit 305 identified based on the state of the battery unit 305, OCV information 505 about the battery unit 305, impedance change information 507 about the battery unit 305, first carbon emissions information 511 related to power consumed by a reused battery unit when the battery unit is reused, third carbon emissions information 513 indicating a reduction compared to that of an internal combustion engine vehicle when the battery unit is reused, or any combination thereof.

The certificate 501 may include a utilization grade 509 of the identified battery unit 305 based on at least one of the SOH information 503, the OCV information 505, the impedance change information 507, or any combination thereof.

Although not shown in FIG. 5, the certificate 501 may include at least one of usage category information 510 about the battery unit 305, age information about the battery unit 305, state information about the battery cell included in the battery unit 305, second carbon emissions information related to power consumed by a battery unit that is recycled and the remanufactured when the battery unit is recycled (e.g., second carbon emissions information 615 in FIG. 6), fourth carbon emissions information indicating a reduction compared to that of an internal combustion engine vehicle when the battery unit is recycled and then remanufactured (e.g., fourth carbon emissions information 616 of FIG. 6), information on the predicted total recovery rate of the battery unit (e.g., total recovery rate information 617 in FIG. 6), recovery rate information about each constituent component predicted to be recovered from the battery unit (e.g., recovery rate information 614 about each constituent component in FIG. 6), information on a constituent component predicted to be recovered from the battery unit (information 611 on the constituent component in FIG. 6), information on a predicted mass of each constituent component predicted to be recovered from the battery unit (e.g., information 612 on a mass in FIG. 6), information on the predicted price of the battery unit (e.g., information 613 on a price in FIG. 6), a constituent component acquisition logic (e.g., a constituent component acquisition logic 619 in FIG. 6), or any combination thereof.

According to an embodiment, the certificate may include a battery unit identifier 502 (e.g., lot identification number (ID), eosio (EOS) transaction ID). The battery unit identifier 502 may be assigned to a battery unit at the time of manufacturing the battery unit.

For example, the battery unit identifier 502 may include an identifier (e.g., a lot ID) assigned to the battery unit at the time of generating the battery unit. For example, the battery unit identifier 502 may include an identifier (e.g., the EOS transaction ID) assigned to the battery unit at the time of storing the certificate on the blockchain network.

According to an embodiment, the one or more processors 205 of the battery diagnosis device 201 may identify the SOH information 503 based on at least one of SOC information about the battery unit, voltage information about the battery unit, temperature information about the battery unit, resistance information about the battery unit, impedance information about the battery unit, information on the number of charges of the battery unit, information on the number of discharges of the battery unit, or any combination thereof.

According to an embodiment, the SOH information 503 may include the state of health of the battery unit 305 (e.g., about 81%), and a stage at which the SOH is included (e.g., poor, average, good).

According to an embodiment, the one or more processors 205 of the battery diagnosis device 201 may identify the OCV information 505 about the battery unit 305 based on voltage information about the battery unit 305.

According to an embodiment, the OCV information 505 may include a first open circuit voltage (e.g., OCV1), a second open circuit voltage (e.g., OCV2), a third open circuit voltage (e.g., OCV3), and a failure detection result for the battery unit 305. The first open circuit voltage may represent an open circuit voltage during full charge after full discharge. The second open circuit voltage may represent an open circuit voltage during full discharge after full charge. The third open circuit voltage may represent an open circuit voltage after a certain rest period after full charge.

For example, when the first open circuit voltage is included within a first reference range, the second open circuit voltage is included within a second reference range, and the third open circuit voltage is included within a third reference range, the OCV information 505 may include the fact that a failure in the battery unit 305 is not detected.

According to an embodiment, the one or more processors 205 of the battery diagnosis device 201 may identify the impedance change information 507 about the battery unit 305 based on impedance information about the battery unit 305.

The impedance change information 507 may include a Nyquist diagram and a failure detection result for the battery unit 305 based on the Nyquist diagram.

According to an embodiment, the one or more processors 205 of the battery diagnosis device 201 may identify the degree of consumption of the battery unit 305 based on at least one of the SOH information 503, the OCV information 505, the impedance change information 507, or any combination thereof. The one or more processors 205 of the battery diagnosis device 201 may identify the utilization grade 509 (e.g., a reuse grade or a recycling grade) according to an algorithm over a life cycle of the battery unit 305 based on the degree of consumption of the battery unit 305. For example, the one or more processors 205 of the battery diagnosis device 201 may identify the utilization grade 509 as the reuse grade for reusing or reprocessing the battery unit when the degree of consumption of the battery unit 305 is less than a reference value. For example, the one or more processors 205 of the battery diagnosis device 201 may identify the utilization grade 509 as the recycling grade for recycling by disassembling the battery unit and then separating it by constituent component, when the degree of consumption of the battery unit 305 is greater than or equal to the reference value.

According to an embodiment, the one or more processors 205 of the battery diagnosis device 201 may identify usage category information (e.g., an energy storage system (ESS), a solar power plant, a wind power plant, or a motorcycle) of the battery unit according to the utilization grade 509.

According to an embodiment, the one or more processors 205 of the battery diagnosis device 201 may generate, based on the utilization grade 509 being a specified grade (e.g., a recycling grade), a certificate (e.g., a certificate 601 in FIG. 6) including at least one of second carbon emissions information (e.g., the second carbon emissions information 615 in FIG. 6), information on the predicted total recovery rate of the battery unit (e.g., the total recovery rate information 617 in FIG. 6), fourth carbon emissions information indicating a reduction compared to that of an internal combustion engine vehicle when the battery unit is recycled and then remanufactured (e.g., fourth carbon emissions information 616 of FIG. 6), information on the predicted total recovery rate of the battery unit (e.g., total recovery rate information 617 in FIG. 6), recovery rate information about each constituent component predicted to be recovered from the battery unit (e.g., recovery rate information 614 about each constituent component in FIG. 6), information on a constituent component predicted to be recovered from the battery unit (information 611 on the constituent component in FIG. 6), information on a mass of each constituent component predicted to be recovered from the battery unit (e.g., information 612 on the mass in FIG. 6), information on the predicted price of the battery unit (e.g., information 613 on the price in FIG. 6), a component acquisition logic (e.g., the constituent component acquisition logic 619 in FIG. 6), information on whether recycling of a constituent component results in profit, information on whether reuse of the battery unit results in profit, information on the grade of each constituent component included in the battery unit according to its purity, the number of battery units that may be produced from each constituent component included in the battery unit, or any combination thereof. Since the battery unit 305 is recovered in the case of the recyclable grade, there is a need for information on a constituent component predicted to be recovered from the battery unit 305 and the mass of each constituent component.

According to another embodiment, the one or more processors 205 of the battery diagnosis device 201 may generate a certificate including, regardless of the utilization grade 509, at least one of information on a constituent component predicted to be recovered from the battery unit 305 (e.g., the information 611 on a constituent component predicted to be recovered from the battery unit in FIG. 6), information on a mass of each constituent component predicted to be recovered from the battery unit (e.g., information 612 on a mass of each constituent component predicted to be recovered from the battery unit in FIG. 6), or any combination thereof. The one or more processors 205 of the battery diagnosis device 201 may include, in the certificate, information on the constituent component and the mass of each constituent component predicted to be recovered from the battery unit 305 even when the utilization grade 509 is the reuse grade, thereby preparing for a case where a user uses the battery unit 305 regardless of the utilization grade.

For example, the one or more processors 205 of the battery diagnosis device 201 may identify first carbon emissions based on the power consumed by the reused battery unit 305.

For example, as the battery unit 305 is used, the state of health (SOH) of the battery unit may decrease. As the SOH of the battery unit 305 decreases, the power consumption of the battery unit 305 may increase. As the power consumption of the battery unit 305 increases, the first carbon emissions indirectly emitted by the battery unit 305 may increase. This is because the first carbon emissions may have a relationship with an electricity carbon emission factor as in Equation 1. The first carbon emissions may be included in the first carbon emissions information 511.

$$\text{First carbon emissions} = \text{Power consumption} \times \text{Electricity carbon emission factor} \qquad \text{[Equation 1]}$$

The first carbon emissions may include carbon emissions based on the power consumed by the battery unit 305 during a reference period. The unit of the first carbon emissions may be tC/year (tonnes of carbon per year), but the embodiments of the present disclosure may not be limited thereto. The power consumption may include power consumed by the battery unit 305 during the reference period. The power consumption may be expressed in MWh/year (megawatt-hours per year), but embodiments of the present disclosure may not be limited thereto. The electricity carbon emission factor (e.g., approximately 0.125 tC/MWh (tonnes of carbon per megawatt-hours)) represents the carbon emissions emitted during an electricity generation process (e.g., the amount of carbon contained in carbon dioxide during the electricity generation process) depending on the power consumption, and may vary depending on the electricity generation method (e.g., thermal power, nuclear power, hydro power). This is because, although carbon is not directly emitted when the battery unit 305 is used, carbon may be emitted when the power discharged from the battery unit 305 is produced. The power consumption may represent power discharged from the battery unit 305. The unit of the electricity carbon emission factor may be tC/MWh, but the embodiments of the present disclosure may not be limited thereto.

The one or more processors 205 of the battery diagnosis device 201 may also acquire the total carbon emissions until the battery unit 305 transitions from the reuse grade to the recycling grade based on the power consumption of the battery unit 305 in the SOH information about the battery unit (e.g., about 85%) and the power consumption of the battery unit 305 in the SOH information that serves as the basis for the recycling grade (e.g., about 65%).

For example, the one or more processors 205 of the battery diagnosis device 201 may identify third carbon emissions reduced compared to that of an internal combustion engine vehicle when the battery unit 305 is reused.

For example, when the battery unit 305 is reused, the carbon emissions from the battery unit 305 that covers a certain distance may be smaller than the carbon emissions from the internal combustion engine vehicle that covers the same distance by a specified percentage (e.g., about 19% of the carbon emissions of the internal combustion engine vehicle). Therefore, the third carbon emissions may have a relationship with the power consumption of the battery unit 305 as shown in Equation 2.

$$\text{Third carbon emissions} = \text{Power consumption} \times \text{Electricity carbon emission factor} \times 0.9 \qquad \text{[Equation 2]}$$

The third carbon emissions may include the carbon emissions from the reused battery unit 305 that is smaller than that of the internal combustion engine vehicle during the reference period. The unit of the third carbon emissions may be tC/year, but the embodiments of the present disclosure may not be limited thereto. The power consumption may include the power consumed by the battery unit 305 during the reference period. The power consumption may be expressed in MWh/year, but the embodiments of the present disclosure may not be limited thereto. The electricity carbon emission factor may represent the carbon emissions emitted during the electricity production process depending on the power consumption. The unit of the electricity carbon emission factor may be tC/MWh, but the embodiments of the present disclosure may not be limited thereto.

FIG. 6 illustrates an example of a certificate of the battery unit whose utilization grade is a recycling grade in the battery diagnosis device and the battery diagnosis method according to an embodiment of the present disclosure.

Referring to FIG. 6, the certificate 601 may include at least one of a battery unit identifier 602 of the battery unit 305, SOH information 603 about the battery unit 305 identified based on the state of the battery unit 305, OCV information 605 about the battery unit 305, impedance change information 607 about the battery unit 305, the second carbon emissions information 615 related to power consumed by the battery unit 305 that is recycled and then remanufactured when the battery unit 305 is recycled, the fourth carbon emissions information 616 indicating a reduction compared to that of an internal combustion engine vehicle when the battery unit 305 is recycled and then remanufactured, the information 617 on the predicted total recovery rate of the battery unit 305, the recovery rate information 614 about each constituent component predicted to be recovered from the battery unit 305, the information 611 on a constituent component predicted to be recovered from the battery unit 305, the information 612 on the mass of each constituent component predicted to be recovered from the battery unit 305, the information 613 on the predicted price of the battery unit 305, the constituent component acquisition logic 619, or any combination thereof. The certificate 601 may include a utilization grade 609 of the identified battery unit 305 based on at least one of the SOH information 603, the OCV information 605, the impedance change information 607, or any combination thereof. The certificate 601 may include at least one of usage category information 610 about the battery unit 305, information 611 on a constituent component predicted to be recovered from the battery unit 305, information 612 on a mass of each constituent component predicted to be recovered from the battery unit 305, information 613 on a predicted price of the battery unit, or any combination thereof.

For example, the one or more processors 205 of the battery diagnosis device 201 may identify second carbon emissions based on the power consumed by the battery unit 305 that is recycled and then remanufactured. The second carbon emissions may be included in the second carbon emissions information 615.

For example, when the battery unit 305 is disassembled and recycled, the information on the mass of each constituent component of the battery unit 305 before the battery unit 305 is disassembled may be different from the information on the mass of each constituent component recovered after the battery unit 305 is disassembled.

The one or more processors 205 of the battery diagnosis device 201 may identify the recovery rate information indicating a recovery rate for each constituent component of the battery unit 305 based on the information on the mass of each constituent component recovered after the battery unit 305 is disassembled with respect to the information on the mass of each constituent component of the battery unit 305.

This is because a break-even point recovery rate may vary depending on the constituent components of the battery unit 305. For example, when the recovery rate of a constituent components such as nickel, cobalt, or manganese is greater than about 95%, the cost of recovering the nickel, cobalt, or manganese may be less than the price of the recovered nickel, cobalt, or manganese. For example, when the recovery rate of a constituent component such as lithium is greater than or equal to about 80% to about 85%, the cost of recovering the lithium may be less than the price of the recovered lithium.

The total recovery rate may be identified based on the individual recovery rates of constituent components. Therefore, the power consumption consumed by a remanufactured battery unit 305 after being disassembled and recycled may include a recovery rate and a value calculated from the power consumption consumed by the battery unit before being disassembled. The second carbon emissions may have a relationship with the electricity carbon emission factor as shown in Equation 3. The total recovery rate may be included in the total recovery rate information 617. The recovery rate of each constituent component may be included in the recovery rate information 614 about each constituent component.

$$\text{Second carbon emissions} = \text{Power consumption} \times \text{Electricity carbon emission factor} \times \text{Total recovery rate} \qquad \text{[Equation 3]}$$

The second carbon emissions may include carbon emissions based on the power consumed by the remanufactured battery unit 305 during a reference period. The unit of the second carbon emissions may be tC/year, but the embodiments of the present disclosure may not be limited thereto. The power consumption may include power consumed by the battery unit 305 during the reference period before being disassembled. The power consumption may be expressed in MWh/year, but the embodiments of the present disclosure may not be limited thereto. The electricity carbon emission factor may represent the carbon emissions emitted during the electricity production process depending on the power consumption. The unit of the electricity carbon emission factor may be tC/MWh, but the embodiments of the present disclosure may not be limited thereto.

For example, the one or more processors 205 of the battery diagnosis device 201 may identify fourth carbon emissions reduced compared to that of an internal combustion engine vehicle when the battery unit 305 is recycled and remanufactured. The fourth carbon emissions may be included in the fourth carbon emissions information 616.

For example, when the battery unit 305 is disassembled, recycled, and then remanufactured, the carbon emissions from the remanufactured battery unit 305 that covers a certain distance may be smaller than the carbon emissions from the internal combustion engine vehicle that covers the same distance by a specified percentage (e.g., about 19% of the carbon emissions of the internal combustion engine vehicle). The carbon emissions from the remanufactured battery unit 305 may be identified by Equation 3. The fourth carbon emissions may have a relationship with the power consumption of the battery unit 305 as shown in Equation 4.

$$\text{Fourth carbon emissions} = \text{Power consumption} \times \text{Electricity carbon emission factor} \times \text{Recovery rate} \times \text{Specified ratio} \qquad \text{[Equation 4]}$$

The fourth carbon emissions may include the carbon emissions from the remanufactured battery unit 305 that is smaller than that of the carbon emissions from the internal combustion engine vehicle during a reference period. The unit of the fourth carbon emissions may be tC/year, but the embodiments of the present disclosure may not be limited thereto. The power consumption may include power consumed by the battery unit 305 during the reference period before being disassembled. The power consumption may be expressed in MWh/year, but the embodiments of the present disclosure may not be limited thereto. The electricity carbon emission factor may represent the carbon emissions emitted during the electricity production process depending on the power consumption. The unit of the electricity carbon emission factor may be tC/MWh, but the embodiments of the present disclosure may not be limited thereto.

The specified ratio (e.g., about 0.19) may represent a ratio of a value obtained by subtracting the carbon emissions from the remanufactured battery unit 305 that covers a certain distance from the carbon emissions from the internal combustion engine vehicle that covers the same distance, relative to the carbon emissions from the internal combustion engine vehicle that covers the same distance.

According to an embodiment, the one or more processors 205 of the battery diagnosis device 201 may identify information on whether recycling of a constituent component results in profit based on the cost required to recover the constituent component and the price of each constituent component. For example, the price of each constituent component may be identified based on the mass of each constituent component included in the battery unit 305, the recovery rate information about each constituent component, and the price of each constituent component.

According to an embodiment, the price of each constituent component may be updated by an external server included as one of the nodes in conjunction with a system.

According to an embodiment, the one or more processors 205 of the battery diagnosis device 201 may identify information on whether reusing a constituent component is profitable based on the cost of the work required to refurbish the battery unit 305 so that the battery unit 305 may be reused and the price of the reused battery unit 305.

According to an embodiment, the price of the reused battery unit 305 may be updated by an external server included as one of the nodes in conjunction with the system.

According to an embodiment, the one or more processors 205 of the battery diagnosis device 201 may include grade information according to the purity of each constituent component included in the battery unit 305 in the certificate. For example, when the purity of nickel included in the battery unit 305 is about 99.8% or higher, the grade information about the nickel may include grade A. For example, when the purity of nickel included in the battery unit 305 is about 99.8% or less, the grade information about the nickel may include grade B.

According to an embodiment, the battery unit identifier 602 may be described with reference to the description of the battery unit identifier 502 of FIG. 5. According to an embodiment, the certificate 601 may include the battery unit identifier 602 (e.g., lot ID (identification number), eosio (EOS) transaction ID). The battery unit identifier 602 may be assigned to the battery unit 305 at the time of manufacturing the battery unit.

According to an embodiment, the SOH information 603 may be described with reference to the description of the SOH information 503 of FIG. 5. According to an embodiment, the SOH information 603 may include the SOH of the battery unit 305 (e.g., about 77%), and a stage at which the SOH is included (e.g., poor).

According to an embodiment, the one or more processors 205 of the battery diagnosis device 201 may identify the OCV information 605 about the battery unit 305 based on voltage information about the battery unit 305.

According to an embodiment, the OCV information 605 may include a first open circuit voltage (e.g., OCV1), a second open circuit voltage (e.g., OCV2), a third open circuit voltage (e.g., OCV3), and a failure detection result for the battery unit 305.

According to an embodiment, the first to third open circuit voltages may be described with reference to the description of the first to third open circuit voltages of FIG. 5. For example, when the first open circuit voltage is included within a first reference range, the second open circuit voltage is not included within a second reference range, and the third open circuit voltage is included within a third reference range, the OCV information 605 may include the fact that a failure in the battery unit 305 is detected based on the second open circuit voltage.

According to an embodiment, the impedance change information 607 may be described with reference to the description of the impedance change information 507 of FIG. 5. For example, the impedance change information 607 may include a Nyquist diagram representing an impedance change due to discharge, and the fact that a failure in the battery unit 305 is detected based on the Nyquist diagram.

According to an embodiment, the utilization grade 609 may be described with reference to the description of the utilization grade 509 of FIG. 5.

The one or more processors 205 of the battery diagnosis device 201 may identify the utilization grade 609 (e.g., recycling grade) based on the degree of consumption of the battery unit 305. For example, the one or more processors 205 of the battery diagnosis device 201 may identify the utilization grade 609 as the recycling grade for recycling by disassembling the battery unit and then separating it by constituent component, when the degree of consumption of the battery unit 305 is greater than or equal to the reference value.

According to an embodiment, the one or more processors 205 of the battery diagnosis device 201 may not identify the usage category information (e.g., an energy storage system (ESS), a solar power plant, a wind power plant, or a motorcycle) about the battery unit 305 when the utilization grade 609 is a recycling grade.

According to an embodiment, the one or more processors 205 of the battery diagnosis device 201 may generate the certificate 601 including at least one of the information 611 on a constituent component predicted to be recovered from the battery unit, the information 612 on a mass of each constituent component predicted to be recovered from the battery unit, or any combination thereof, based on whether the utilization grade 609 being a specified grade (e.g., the recycling grade). This is because, in the case of the recyclable grade, the information on a constituent component and a mass of each constituent component, which are predicted to be recovered from the battery unit 305, is required.

According to an embodiment, the one or more processors 205 of the battery diagnosis device 201 may identify, through a learning model (e.g., a learning model 803 of FIG. 8), at least one of the information 611 on a constituent component predicted to be recovered from the battery unit 305, the information 612 on a mass of each constituent component predicted to be recovered from the battery unit 305, the information 613 on a predicted price indicating the price of the battery unit 305, or any combination thereof.

The constituent component acquisition logic 619 may include a method of identifying at least one of the information 611 on a constituent component predicted to be recovered from the battery unit 305, the information 612 on a mass of each constituent component predicted to be recovered from the battery unit 305, the price information 613 indicating a predicted price of the battery unit 305, or any combination thereof, through the learning model.

For example, the constituent component acquisition logic 619 may represent a method of acquiring the information 612 on a mass of each constituent component predicted to be recovered from the battery unit 305 by calculating the recovery rate information 614, the information on a mass of each constituent component of the battery unit 305 in the BOL state, the recovery rate of each constituent component included in the recovery rate information 614, and the information on a mass of each constituent component in the BOL state. For another example, the constituent component acquisition logic 619 may include the type of learning model.

The constituent component acquisition logic 619 is described below in FIG. 8.

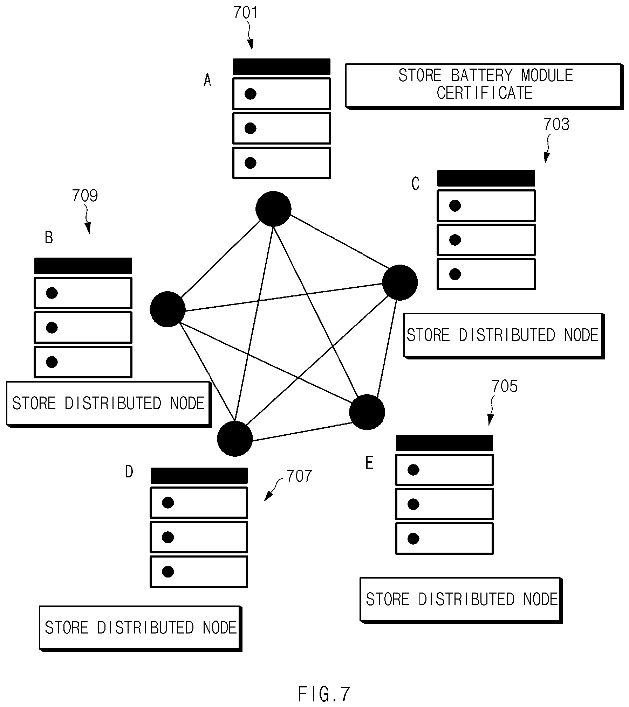

FIG. 7 illustrates an example of a plurality of nodes, each of which corresponds to an external server, in the battery diagnosis device and the battery diagnosis method according to an embodiment of the present disclosure.

Referring to FIG. 7, the one or more processors 205 of the battery diagnosis device 201 may convert a certificate into blockchain data or non-fungible token (NFT) data.

According to an embodiment, the one or more processors 205 of the battery diagnosis device 201 may store the blockchain data or NFT data in the plurality of nodes including a first node 701, a second node 703, a third node 705, a fourth node 707, and a fifth node 709.

According to an embodiment, the first node 701, the second node 703, the third node 705, the fourth node 707, and the fifth node 709 may represent external servers.

According to an embodiment, the external servers may include a server of a seller of the battery unit, or a server of a buyer.

According to an embodiment, the one or more processors 205 of the battery diagnosis device 201 may store the blockchain data or NFT data through a smart contract when diagnosing a battery unit or selling or purchasing a battery unit. When there is a purchaser of the battery unit, the one or more processors 205 of the battery diagnosis device 201 may also store information on the purchaser of the battery unit together with the converted certificate.

According to an embodiment, the one or more processors 205 of the battery diagnosis device 201 may check the nodes and determine their integrity whenever information on the battery unit and the converted certificate are stored.

According to an embodiment, when the battery unit is purchased or sold, the one or more processors 205 of the battery diagnosis device 201 may retrieve a battery unit identifier and utilization grade converted into blockchain data through a quick response (QR) code, or retrieve the certificate converted into the NFT data.

FIG. 8 illustrates examples of input data and output data of a learning model, in the battery diagnosis device and the battery diagnosis method according to an embodiment of the present disclosure.

Referring to FIG. 8, a learning model 803 may output output data 805 based on input data 801. The input data 801 may include at least one of SOH information about the battery unit 305, impedance change information about the battery unit 305, OCV information about the battery unit 305, information on a constituent component of the battery unit 305 in the BOL state, information on a mass of each constituent component of the battery unit 305 in the BOL state, or a combination thereof. The output data 805 may include at least one of a utilization grade of the battery unit 305, information on a constituent component predicted to be recovered from the battery unit 305, information on a mass of each constituent component predicted to be recovered from the battery unit 305, information on a predicted price of the battery unit, or any combination thereof.

According to an embodiment, the learning model 803 may identify recovery rate information indicating the recovery rate of each constituent component based on at least one of the SOH information, the impedance change information, the OCV information, or any combination thereof. The recovery rate may indicate information on a mass of each constituent component recovered after the battery unit 305 is disassembled with respect to the information on a mass of each constituent component of the battery unit 305.

The learning model 803 may identify the information on a constituent component predicted to be recovered from the battery unit 305, the information on a mass of each constituent component predicted to be recovered from the battery unit 305, or the price information based on at least one of the recovery rate, the information on a constituent component predicted to be recovered from the battery unit 305, the information on a mass predicted to be recovered from the battery unit 305, or any combination thereof.

This is because the degree of degradation of the battery unit 305 may be known through the SOH information, the impedance change information, and the OCV information and a greater degree of degradation of the battery unit 305 may result in a lower recovery rate.

For example, the greater the SOH information, the greater the degree of degradation of the battery unit 305.

For example, the greater a difference between the Nyquist diagram of the battery unit included in the impedance change information and the Nyquist diagram of the normal battery unit, the greater the degree of degradation of the battery unit 305.

For example, when the first open circuit voltage, the second open circuit voltage, or the third open circuit voltage included in the OCV information is outside a reference range, the degree of degradation of the battery unit 305 may be greater than a reference degree of degradation.

According to an embodiment, for training of the learning model 803, the one or more processors 205 of the battery diagnosis device 201 may input, into the learning model 803, training data including at least one of SOH information about a battery unit different from the battery unit 305, impedance change information about the different battery unit, OCV information about the different battery unit, or any combination thereof.

According to an embodiment, the one or more processors 205 of the battery diagnosis device 201 may input, into the learning model 803, target data including at least one of the information on a mass of each constituent component of a different battery unit in the BOL state, the recovery rate information indicating the recovery rate identified by comparing the information on a mass of each constituent component recovered from the disassembled different battery unit, information on a constituent component recovered from the different battery unit, information on a mass of each constituent component recovered from the different battery unit, information on a price of the different battery unit, or any combination thereof.

According to an embodiment, the one or more processors 205 of the battery diagnosis device 201 may train the learning model 803 based on the correlation between training data and target data.

According to an embodiment, when the one or more processors 205 of the battery diagnosis device 201 include an artificial intelligence processor (e.g., a neural processing unit (NPU)) for training the learning model 803, the artificial intelligence processor may train an artificial neural network by utilizing weight data stored in the memory as training data for the machine learning model. The learning model 803 may include an artificial neural network (ANN) model.

According to an embodiment, examples of the learning algorithm may include supervised learning, unsupervised learning, semi-supervised learning, or reinforcement learning.

According to an embodiment, the artificial neural network included in the learning model 803 may be composed of a plurality of neural network layers. Each of the plurality of neural network layers may have a plurality of weight values and perform neural network operations through operations between an operation result of a previous layer and the plurality of weight values. The plurality of weight values of the plurality of neural network layers may be optimized by a learning result of the artificial intelligence model. For example, the plurality of weight values may be updated so that a loss value or cost value acquired in the artificial intelligence model is reduced or minimized during a learning process.

According to an embodiment, the artificial neural network may include a deep neural network (DNN), and may be, for example, a convolutional neural network (CNN), a deep neural network (DNN), a recurrent neural network (RNN), a restricted boltzmann machine (RBM), a deep belief network (DBN), a bidirectional recurrent deep neural network (BRDNN), a deep Q-network, or the like, but may not be limited to the above examples.

According to an embodiment, the processor 205 of the battery diagnosis device 201 may output, based on the selected learning model 803, at least one of the utilization grade of the battery unit 305, the information on a constituent component predicted to be recovered from the battery unit 305, the information on the mass of each constituent component predicted to be recovered from the battery unit 305, the information on a predicted price of the battery unit, or any combination thereof, which are the output data 805, that has a causal relationship with at least one of the SOH information about the battery unit 305, the impedance change information about the battery unit 305, the OCV information about the battery unit 305, the information on a constituent component of the battery unit 305 in the BOL state, information on a mass of each constituent component of the battery unit 305 in the BOL state, or a combination thereof, which are the input data 801.

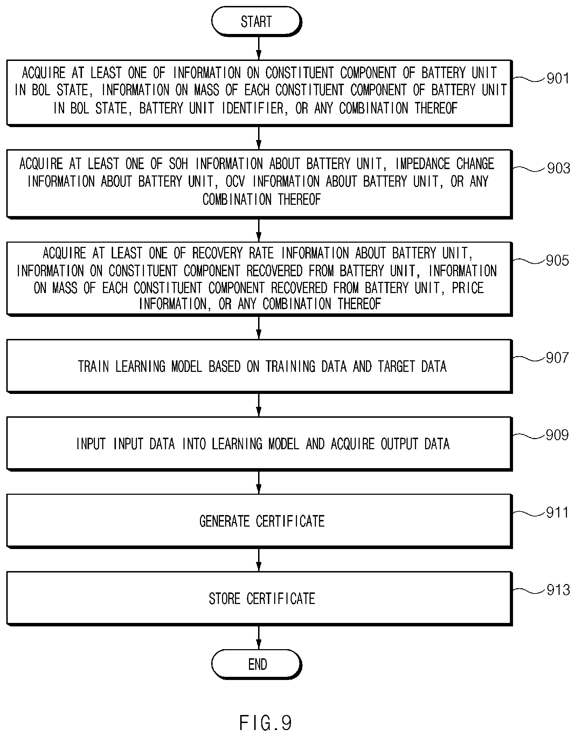

FIG. 9 illustrates an example of a flow of operations of the battery diagnosis device for storing a certificate generated based on a trained learning model, in the battery diagnosis device and the battery diagnosis method according to an embodiment of the present disclosure.

Referring to FIG. 9, in first operation 901, the one or more processors 205 of the battery diagnosis device 201 may acquire at least one of information on a constituent component of a battery unit in a BOL state, information on a mass of each constituent component in the battery unit in the BOL state, a battery unit identifier, or any combination thereof.

According to an embodiment, the one or more processors 205 of the battery diagnosis device 201 may acquire information on a mass of each constituent component of a disassembled battery unit in the BOL state based on the battery unit identifier.

In second operation 903, one or more processors 205 of the battery diagnosis device 201 according to an embodiment may acquire at least one of SOH information about the battery unit, impedance change information about the battery unit, OCV information about the battery unit, or any combination thereof.

According to an embodiment, the one or more processors 205 of the battery diagnosis device 201 may identify, through the diagnosis sensor, the state of the battery unit including at least one of the SOC information about the battery unit, the voltage information about the battery unit, the temperature information about the battery unit, resistance information about the battery unit, the impedance information about the battery unit, the information on the number of charges of the battery unit, the information on the number of discharges of the battery unit, or any combination thereof.

According to an embodiment, the one or more processors 205 of the battery diagnosis device 201 may identify, based on the state of the battery unit, at least one of SOH information, impedance change information about the battery unit, OCV information about the battery unit, or any combination thereof.

In third operation 905, the one or more processors 205 of the battery diagnosis device 201 according to an embodiment may acquire at least one of recovery rate information about the battery unit, information on a constituent component recovered from the battery unit, information on a mass of each constituent component recovered from the battery unit, price information, or any combination thereof.

It is necessary to disassemble the battery unit to recover its constituent components. A method for disassembling the battery unit may include a method for physically disassembling the battery unit, or a method for extracting constituent components using an aqueous solution and acquiring the extracted constituent components by crystallization (e.g., a method for recovering constituent components such as nickel, manganese, and cobalt).

For example, copper, plastic, aluminum, iron phosphate, and lithium may be recovered by physically separating the battery units, such as by crushing or pulverizing them after the battery units are discharged.

For example, black mass may be acquired when a battery unit is physically disassembled after being discharged. In addition, after an organic acid such as sulfuric acid is added to the black mass, cobalt, nickel, manganese, graphite, and carbon may be recovered through extraction and crystallization processes using an aqueous solution.

According to an embodiment, the price information may be identified based on the information on a mass of each constituent component recovered from the battery unit. The price information may include the cost incurred during the recycling process or the price of the recovered constituent components.

In fourth operation 907, the one or more processors 205 of the battery diagnosis device 201 according to an embodiment may train a learning model based on training data and target data.

That is, the one or more processors 205 of the battery diagnosis device 201 according to an embodiment may train the learning model with the correlation between the training data and the target data. The learning model may include a neural network trained through supervised learning (e.g., linear regression), but embodiments of the present disclosure may not be limited thereto.

In fifth operation 909, the one or more processors 205 of the battery diagnosis device 201 according to an embodiment may input input data into the learning model and acquire output data.

In sixth operation 911, the one or more processors 205 of the battery diagnosis device 201 according to an embodiment may generate a certificate.

In seventh operation 913, the one or more processors 205 of the battery diagnosis device 201 according to an embodiment may store the certificate.

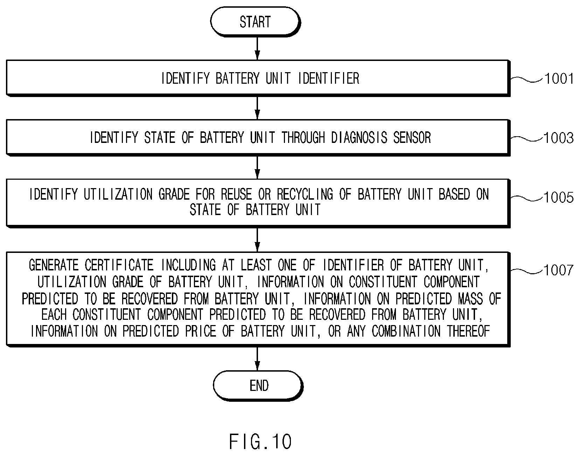

FIG. 10 illustrates an example of a flow of operations of the battery diagnosis device for generating a certificate, in the battery diagnosis device and the battery diagnosis method according to an embodiment of the present disclosure.

Referring to FIG. 10, in first operation 1001, the one or more processors 205 of the battery diagnosis device 201 according to an embodiment may identify an identifier of a battery unit.

In second operation 1003, the one or more processors 205 of the battery diagnosis device 201 according to an embodiment may identify the state of the battery unit through the diagnosis sensor.

In third operation 1005, the one or more processors 205 of the battery diagnosis device 201 according to an embodiment may identify a utilization grade for reuse or recycling of the battery unit based on the state of the battery unit.

In fourth operation 1007, the one or more processors 205 of the battery diagnosis device 201 according to an embodiment may generate, based on the identifier of the battery unit, a certificate including at least one of the utilization grade of the battery unit, information on a constituent component predicted to be recovered from the battery unit, information on a mass of each constituent component predicted to be recovered from the battery unit, price information indicating a predicted price of the battery unit, or any combination thereof.

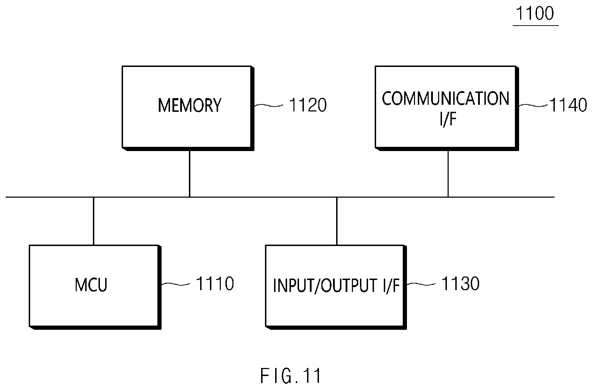

FIG. 11 is a block diagram showing a hardware configuration of a computing system for performing a battery diagnosis method in the battery diagnosis device and the battery diagnosis method according to an embodiment of the present disclosure.

Referring to FIG. 11, a computing system 1100 according to an embodiment disclosed herein may include a microcontroller unit (MCU) 1110, a memory 1120, an input/output interface (I/F) 1130, and a communication I/F 1140.

The MCU 1110 may be one or more processors that execute various programs (e.g., a battery cell data collection program, a graph generation program, a data analysis program, a data decomposition algorithm, a normalization program, a battery cell diagnosis program, and the like) stored in the memory 1120, process various pieces of information including battery cell characteristic data, latent variables, and the like through the programs, and perform functions of the diagnosis device 201 or the server 301 shown in the above-described FIGS. 2 to 7.

The memory 1120 may store various programs such as the battery cell data collection program, the graph generation program, the data analysis program, the data decomposition algorithm, the normalization program, the battery cell diagnosis program, and the like.

A plurality of memories 1120 may be provided as needed. The memory 1120 may be a volatile memory or nonvolatile memory. As the volatile memory, the memory 1120 may be a random-access memory (RAM), dynamic RAM (DRAM), static RAM (SRAM), or the like. As the nonvolatile memory, for the memory 1120, a read-only memory (ROM), a programmable ROM (PROM), an electrically alterable ROM (EAROM), an erasable programmable ROM (EPROM), an electrically erasable programmable ROM (EEPROM), a flash memory, or the like. The examples of memories 1120 listed above are only exemplary and are not limited to the examples.

The input/output I/F 1130 may provide an interface that enables data to be transmitted and received by connecting an input device (not illustrated) such as a keyboard, mouse, or touch panel, and an output device (not illustrated) such as a display and the MCU 1110.

The communication I/F 1140 is a component capable of transmitting and receiving various data with a server, and may be any device capable of supporting wired or wireless communication. For example, the diagnosis device 201 may transmit and receive various types of information, including a shape model of a battery cell or the like, to and from a separately provided external server through the communication I/F 1140.

By being recorded in the memory 1120 and processed by the MCU 1110 in this way, a computer program according to an embodiment disclosed herein may be implemented, for example, as a module that performs each of the functions shown in FIG. 2.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The foregoing disclosure outlines features of several embodiments so that those skilled in the art may better understand the aspects of the present disclosure. Those skilled in the art will appreciate that the present disclosure may readily serve as a basis for designing or modifying other structures for carrying out the same purposes or achieving the same advantages of the embodiments introduced herein. Furthermore, those skilled in the art will recognize that such equivalent configurations do not depart from the scope of the present disclosure, and that various changes, substitutions, and modifications may be made herein without departing from the scope of the present disclosure.

**Claims**

1. A battery diagnosis device comprising:

    a memory storing at least one instruction; and
    one or more processors executing the at least one instruction,
    wherein the one or more processors are configured to:

        identify an identifier and a state of a battery unit;
        identify a utilization grade for reuse or recycling of the battery unit based on the state of the battery unit; and
        generate a certificate including at least one of the utilization grade of the battery unit, information on a constituent component predicted to be recovered from the battery unit, information on a predicted mass of each constituent component predicted to be recovered from the battery unit, information on a predicted price of the battery unit, or any combination thereof, based on the identifier of the battery unit.

2. The battery diagnosis device of claim 1, wherein the one or more processors are configured to:

   identify at least one of state of health (SOH) information about the battery unit, impedance change information about the battery unit, open circuit voltage (OCV) information about the battery unit, or any combination thereof based on the state of the battery unit; and
   identify the utilization grade based on at least one of the SOH information, the impedance change information, the OCV information, or any combination thereof.

3. The battery diagnosis device of claim 1, wherein the one or more processors are configured to identify the state of the battery unit including at least one of state of charge (SOC) information about the battery unit, voltage information about the battery unit, temperature information about the battery unit, resistance information about the battery unit, impedance information about the battery unit, information on the number of charges of the battery unit, information on the number of discharges of the battery unit, or any combination thereof.

4. The battery diagnosis device of claim 1, wherein the certificate is configured to further include at least one of usage category information about the battery unit according to the utilization grade, age information about the battery unit, SOH information about the battery unit, impedance change information about the battery unit, OCV information about the battery unit, state information about a battery cell included in the battery unit, or any combination thereof.

5. The battery diagnosis device of claim 1, wherein the one or more processors are configured to:

   convert the certificate into blockchain data or nonfungible token (NFT) data; and
   store the blockchain data or the NFT data in a plurality of nodes, each corresponding to an external server.

6. The battery diagnosis device of claim 1, wherein the one or more processors are configured to:

   identify, based on the state of the battery unit, at least one of SOH information about the battery unit, impedance change information about the battery unit, OCV information about the battery unit, information on a constituent component of the battery unit corresponding to the identifier of the battery unit in a beginning-of-life (BOL) state, information on a mass of each constituent component of the battery unit corresponding to the identifier of the battery unit in the BOL state, or any combination thereof;
   input, into a learning model, at least one of the SOH information, the impedance change information, the OCV information, the information on a constituent component of the battery unit in the BOL state, the information on a mass of each constituent component of the battery unit corresponding to the identifier of the battery unit in the BOL state, or any combination thereof; and
   identify at least one of the utilization grade output from the learning model, the information on a constituent component predicted to be recovered from the battery unit, the information on the mass of each constituent component predicted to be recovered from the battery unit, the price information, or any combination thereof.

7. The battery diagnosis device of claim 6, wherein the one or more processors are configured to:

   input, into the learning model, training data including at least one of SOH information about a battery unit different from the battery unit, impedance change information about the different battery unit, OCV information about the different battery unit, or any combination thereof;
   input, into the learning model, target data including at least one of recovery rate information indicating a recovery rate depending on a constituent component of the different battery unit identified by comparing the information on the mass of each constituent component of the different battery unit in the BOL state with information on the mass of each constituent component recovered from the disassembled different battery unit, information on a constituent component recovered from the different battery unit, information on a mass of each constituent component recovered from the different battery unit, information on a price of the different battery unit, or any combination thereof; and
   train the learning model based on a correlation between the training data and the target data.

8. The battery diagnosis device of claim 1, wherein the certificate is configured to further include at least one of first carbon emissions corresponding to power consumed by the battery unit when the battery unit is reused, second carbon emissions corresponding to power consumed by the battery unit that is recycled and then remanufactured when the battery unit is recycled, information on a predicted recovery rate of the battery unit, or any combination thereof.

9. The battery diagnosis device of claim 8, wherein the one or more processors are configured to generate, based on the utilization grade being a specified grade, the certificate including at least one of the second carbon emissions, the information on a predicted recovery rate of the battery unit, the information on a constituent component predicted to be recovered from the battery unit, the mass information, or any combination thereof.

10. A battery diagnosis method comprising:

identifying an identifier of a battery unit;
identifying a state of a battery unit;
identifying a utilization grade for reuse or recycling of the battery unit based on the state of the battery unit; and generating a certificate including at least one of the utilization grade of the battery unit, information on a constituent component predicted to be recovered from the battery unit, information on a predicted mass of each constituent component predicted to be recovered from the battery unit, information on a predicted price of the battery unit, or any combination thereof, based on the identifier of the battery unit.

11. The battery diagnosis method of claim 10, wherein the identifying of the utilization grade for reuse or recycling of the battery unit based on the state of the battery unit includes:

identifying at least one of SOH information about the battery unit, impedance change information about the battery unit, OCV information about the battery unit, or any combination thereof based on the state of the battery unit; and
identifying the utilization grade based on at least one of the SOH information, the impedance change information, the OCV information, or any combination thereof.

12. The battery diagnosis method of claim 10, wherein the identifying of the state of the battery unit includes identifying the state of the battery unit including at least one of SOC information about the battery unit, voltage information about the battery unit, temperature information about the battery unit, resistance information about the battery unit, impedance information about the battery unit, information on the number of charges of the battery unit, information on the number of discharges of the battery unit, or any combination thereof.

13. The battery diagnosis method of claim 10, wherein the certificate is configured to further include at least one of usage category information about the battery unit according to the utilization grade, age information about the battery unit, SOH information about the battery unit, impedance change information about the battery unit, OCV information about the battery unit, state information about a battery cell included in the battery unit, or any combination thereof.

14. The battery diagnosis method of claim 10, further comprising:

converting the certificate into blockchain data or nonfungible token (NFT) data, and
storing the blockchain data or the NFT data in a plurality of nodes, each corresponding to an external server.

15. The battery diagnosis method of claim 10, wherein the generating of the certificate including at least one of the utilization grade of the battery unit, the information on a constituent component predicted to be recovered from the battery unit, the information on a predicted mass of each constituent component predicted to be recovered from the battery unit, the information on a predicted price of the battery unit, or any combination thereof, based on the identifier of the battery unit includes:

identifying, based on the state of the battery unit, at least one of SOH information about the battery unit, impedance change information about the battery unit, OCV information about the battery unit, information on a constituent component corresponding to the identifier of the battery unit, information on a mass of each constituent component corresponding to the identifier of the battery unit, or any combination thereof;
inputting at least one of the SOH information, the impedance change information, the OCV information, the information on a constituent component of the battery unit corresponding to the identifier of the battery unit in the BOL state, the information on a mass of each constituent component of the battery unit corresponding to the identifier of the battery unit in the BOL state, or any combination thereof, into a learning model; and
identifying at least one of the utilization grade output from the learning model, the information on a constituent component predicted to be recovered from the battery unit, the information on the mass of each constituent component predicted to be recovered from the battery unit, the price information, or any combination thereof.

EP 4 768 962 A1



16. The battery diagnosis method of claim 15, further comprising:

inputting, into the learning model, training data including at least one of SOH information about a battery unit different from the battery unit, impedance change information about the different battery unit, OCV information about the different battery unit, or any combination thereof;
inputting, into the learning model, target data including at least one of recovery rate information indicating a recovery rate depending on a constituent component of the different battery unit identified by comparing the information on the mass of each constituent component of the different battery unit in the BOL state with information on the mass of each constituent component recovered from the different battery unit, information on a constituent component recovered from the different battery unit, information on a mass of each constituent component recovered from the different battery unit, information on a price of the different battery unit, or any combination thereof; and
training the learning model based on a correlation between the training data and the target data.

17. The battery diagnosis method of claim 10, wherein the certificate is configured to further include at least one of first carbon emissions corresponding to power consumed by the battery unit when the battery unit is reused, second carbon emissions corresponding to power consumed by the battery unit that is recycled and then remanufactured when the battery unit is recycled, information on a predicted recovery rate of the battery unit, or any combination thereof.

18. The battery diagnosis method of claim 17, further comprising generating, based on the utilization grade being a specified grade, the certificate including at least one of the second carbon emissions, the information on a predicted recovery rate of the battery unit, the information on a constituent component predicted to be recovered from the battery unit, the mass information, or any combination thereof.

FIG.1

BATTERY DIAGNOSIS DEVICE(201)

MEMORY(203)

ONE OR MORE PROCESSORS(205)

FIG.2

FIG.3

FIG.4

501
502

| BATTERY MODULE CERTIFICATE | LOTID:LG-LOTID2023.03.28.15.03.01/EOS TRANSACTION ID:ABCDTEST1 | | |
|---|---|---|---|
| | SOH(state of health) | 81% | AVERAGE |
| | OCV (Open Circuit Voltage) | OCV1 OK OCV2 OK OCV3 OK | NO FAILURE DETECTED |
| | EIS DIAGNOSIS (Electrical Impedance Spectroscopy) | NO IMPEDANCE CHANGE | GOOD |
| LIFECYCLE ALGORITHM RESULTS: REUSE GRADE USAGE CATEGORY: ESS, SOLAR POWER PLANT, WIND POWER PLANT, MOTORCYCLE, ETC. | | | |

503
505
507
509
510

511 — USAGE CATEGORY: ESS, SOLAR POWER PLANT, WIND POWER PLANT, MOTORCYCLE, ETC. 3.76(tC/Year)

513 — CARBON EMISSIONS REDUCED COMPARED TO THAT OF INTERNAL COMBUSTION ENGINE VEHICLES WHEN REUSED

FIG.5

601 602

BATTERY MODULE CERTIFICATE | LOTID:LG-LOTID2023.03.28.15.03.02/EOS TRANSACTION ID:ABCDTEST2

| | | |
|---|---|---|
| SOH(state of health) | 77% | POOR |
| OCV (Open Circuit Voltage) | OCV1 OK OCV2 NO OCV3 OK | OCV2 FAILURE DETECTED |
| EIS DIAGNOSIS (Electrical Impedance Spectroscopy) | IMPEDANCE CHANGE DUE TO MANY DISCHARGES | BAD |

LIFECYCLE ALGORITHM RESULTS: RECYCLING GRADE
USSAGE CATEGORY: NONE

| | | |
|---|---|---|
| COBALT(mg/kg) | 207,076 | RECOVERY RATE: 0.90 |
| LITHIUM(mg/kg) | 3,628 | RECOVERY RATE: 0.89 |
| MANGANESE(mg/kg) | 10,533 | RECOVERY RATE: 0.91 |
| NICKEL(mg/kg) | 16,482 | RECOVERY RATE: 0.87 |
| ... | ... | |
| COMPREHENSIVE DIAGNOSIS PRICE | APPROXIMATELY 2,100,000 WON | |

612 614

CARBON EMISSIONS FROM BATTERY UNIT THAT IS RECYCLED AND THEN REMANUFACTURED: 3.38(tC/Year)

CARBON EMISSIONS REDUCED COMPARED TO THAT OF INTERNAL COMBUSTION ENGINE VEHICLES WHEN RECYCLED:0.64(tC/Year)

TOTAL RECOVERY RATE:0.89

CONSTITUENT COMPONENT ACQUISITION LOGIC

617 619

FIG.6

FIG.7

803

| SOH INFORMATION, IMPEDANCE CHANGE INFORMATION, OCV INFORMATION, INFORMATION ON CONSTITUENT COMPONENT IN BOL STATE, INFORMATION ON MASS OF EACH CONSTITUENT COMPONENT IN BOL STATE(801) | → | [neural network] | → | UTILIZATION GRADE, INFORMATION ON CONSTITUENT COMPONENT PREDICTED TO BE RECOVERED, INFORMATION ON MASS OF EACH CONSTITUENT COMPONENT PREDICTED TO BE RECOVERED, INFORMATION ON PREDICTED PRICE (805) |

FIG.8

START

ACQUIRE AT LEAST ONE OF INFORMATION ON CONSTITUENT COMPONENT OF BATTERY UNIT IN BOL STATE, INFORMATION ON MASS OF EACH CONSTITUENT COMPONENT OF BATTERY UNIT IN BOL STATE, BATTERY UNIT IDENTIFIER, OR ANY COMBINATION THEREOF — 901

ACQUIRE AT LEAST ONE OF SOH INFORMATION ABOUT BATTERY UNIT, IMPEDANCE CHANGE INFORMATION ABOUT BATTERY UNIT, OCV INFORMATION ABOUT BATTERY UNIT, OR ANY COMBINATION THEREOF — 903

ACQUIRE AT LEAST ONE OF RECOVERY RATE INFORMATION ABOUT BATTERY UNIT, INFORMATION ON CONSTITUENT COMPONENT RECOVERED FROM BATTERY UNIT, INFORMATION ON MASS OF EACH CONSTITUENT COMPONENT RECOVERED FROM BATTERY UNIT, PRICE INFORMATION, OR ANY COMBINATION THEREOF — 905

TRAIN LEARNING MODEL BASED ON TRAINING DATA AND TARGET DATA — 907

INPUT INPUT DATA INTO LEARNING MODEL AND ACQUIRE OUTPUT DATA — 909

GENERATE CERTIFICATE — 911

STORE CERTIFICATE — 913

END

FIG.9

```
                          ┌─────────────┐
                          │    START    │
                          └──────┬──────┘
                                 │
                                 ▼
   ┌──────────────────────────────────────────────────────────────┐
   │           IDENTIFY BATTERY UNIT IDENTIFIER                    │───1001
   └──────────────────────────────┬───────────────────────────────┘
                                  │
                                  ▼
   ┌──────────────────────────────────────────────────────────────┐
   │   IDENTIFY STATE OF BATTERY UNIT THROUGH DIAGNOSIS SENSOR     │───1003
   └──────────────────────────────┬───────────────────────────────┘
                                  │
                                  ▼
   ┌──────────────────────────────────────────────────────────────┐
   │ IDENTIFY UTILIZATION GRADE FOR REUSE OR RECYCLING OF BATTERY  │───1005
   │        UNIT BASED ON STATE OF BATTERY UNIT                    │
   └──────────────────────────────┬───────────────────────────────┘
                                  │
                                  ▼
   ┌──────────────────────────────────────────────────────────────┐
   │ GENERATE CERTIFICATE INCLUDING AT LEAST ONE OF IDENTIFIER OF  │───1007
   │ BATTERY UNIT, UTILIZATION GRADE OF BATTERY UNIT, INFORMATION  │
   │ ON CONSTITUENT COMPONENT PREDICTED TO BE RECOVERED FROM       │
   │ BATTERY UNIT, INFORMATION ON PREDICTED MASS OF EACH           │
   │ CONSTITUENT COMPONENT PREDICTED TO BE RECOVERED FROM BATTERY  │
   │ UNIT, INFORMATION ON PREDICTED PRICE OF BATTERY UNIT, OR ANY  │
   │ COMBINATION THEREOF                                           │
   └──────────────────────────────┬───────────────────────────────┘
                                  │
                                  ▼
                          ┌─────────────┐
                          │     END     │
                          └─────────────┘
```

FIG.10

1100

MEMORY — 1120

COMMUNICATION I/F — 1140

MCU — 1110

INPUT/OUTPUT I/F — 1130

FIG.11

## INTERNATIONAL SEARCH REPORT

| International application No. |
| --- |
| **PCT/KR2025/005163** |

| A. | CLASSIFICATION OF SUBJECT MATTER |
| --- | --- |

**G01R 31/392**(2019.01)i; **G01R 31/367**(2019.01)i; **G01R 31/396**(2019.01)i; **G01R 31/389**(2019.01)i;
**G01R 31/3835**(2019.01)i; **G06N 3/08**(2006.01)i; **H04L 9/00**(2006.01)i; **H01M 10/54**(2006.01)i

According to International Patent Classification (IPC) or to both national classification and IPC

| B. | FIELDS SEARCHED |
| --- | --- |

Minimum documentation searched (classification system followed by classification symbols)

G01R 31/392(2019.01); G06Q 50/40(2024.01); H01M 10/42(2006.01); H01M 10/44(2006.01); H01M 10/48(2006.01); H02J 13/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 진단(diagnosing), 식별(identification), 인증서(certification), 상태(state), 등급(grade)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0027791 A (LG ENERGY SOLUTION, LTD.) 08 March 2022 (2022-03-08)<br>see paragraphs [0011], [0047]-[0107], [0121]; and figures 1-7. | 1-18 |
| Y | JP 7156373 B2 (SUMITOMO ELECTRIC INDUSTRIES, LTD.) 19 October 2022 (2022-10-19)<br>see paragraphs [0057]-[0068], [0122]-[0129]; and figures 4-5, 15. | 1-18 |
| Y | JP 2010-108833 A (NEC CORP.) 13 May 2010 (2010-05-13)<br>see paragraphs [0122]-[0123]; and figure 3. | 8-9,17-18 |
| A | JP 2018-050457 A (TOSHIBA CORP. et al.) 29 March 2018 (2018-03-29)<br>see paragraphs [0009]-[0037]; and figures 1-8. | 1-18 |
| A | US 2021-0151813 A1 (NIPPON TELEGRAPH AND TELEPHONE CORPORATION) 20 May 2021 (2021-05-20)<br>see paragraphs [0048]-[0055]; and figure 1. | 1-18 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **17 July 2025** | **17 July 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/005163**

| Patent document cited in search report | | | Publication date (day/month/year) | Patent family member(s) | | | Publication date (day/month/year) |
|---|---|---|---|---|---|---|---|
| KR | 10-2022-0027791 | A | 08 March 2022 | CN | 115151922 | A | 04 October 2022 |
| | | | | EP | 4148655 | A1 | 15 March 2023 |
| | | | | EP | 4148655 | A4 | 01 November 2023 |
| | | | | EP | 4148655 | B1 | 01 January 2025 |
| | | | | EP | 4492536 | A2 | 15 January 2025 |
| | | | | EP | 4492536 | A3 | 16 April 2025 |
| | | | | ES | 3009359 | T3 | 26 March 2025 |
| | | | | JP | 2023-513685 | A | 03 April 2023 |
| | | | | JP | 2024-133055 | A | 01 October 2024 |
| | | | | JP | 7517773 | B2 | 17 July 2024 |
| | | | | JP | 7667347 | B2 | 22 April 2025 |
| | | | | KR | 10-2025-0093473 | A | 24 June 2025 |
| | | | | KR | 10-2824060 | B1 | 23 June 2025 |
| | | | | PL | 4148655 | T3 | 28 April 2025 |
| | | | | US | 2023-0278431 | A1 | 07 September 2023 |
| | | | | US | 2025-0115133 | A1 | 10 April 2025 |
| | | | | WO | 2022-045842 | A1 | 03 March 2022 |
| JP | 7156373 | B2 | 19 October 2022 | CN | 112055912 | A | 08 December 2020 |
| | | | | DE | 112019002799 | T5 | 18 March 2021 |
| | | | | US | 2021-0367277 | A1 | 25 November 2021 |
| | | | | WO | 2019-230069 | A1 | 05 December 2019 |
| JP | 2010-108833 | A | 13 May 2010 | CN | 101728566 | A | 09 June 2010 |
| | | | | CN | 101728566 | B | 04 June 2014 |
| | | | | EP | 2182575 | A1 | 05 May 2010 |
| | | | | EP | 2182575 | B1 | 08 March 2017 |
| | | | | JP | 5509577 | B2 | 04 June 2014 |
| | | | | US | 2010-0114800 | A1 | 06 May 2010 |
| JP | 2018-050457 | A | 29 March 2018 | | None | | |
| US | 2021-0151813 | A1 | 20 May 2021 | JP | 2020-010511 | A | 16 January 2020 |
| | | | | JP | 7028089 | B2 | 02 March 2022 |
| | | | | US | 11978868 | B2 | 07 May 2024 |
| | | | | WO | 2020-012919 | A1 | 16 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240085657
- KR 1020240136291